# EUROPEAN PATENT APPLICATION

(11) **EP 0 805 099 A2**
(43) Date of publication of application: **05.11.1997**
(21) Application number: 97106791.3
(22) Date of filing: 24.04.1997
(51) Int. Cl.: B62J 6/16

(54) **Switch for controlling direction indicators for motorcycles**

(30) Priority: 03.05.1996 IT MI960875; 25.02.1997 IT MI970135 U
(71) Applicant: Domino S.p.A., 22060 Sirtori, Lecco (IT)
(72) Inventor: Bertini, Paolo, 22060 Sirtori, Lecco (IT)
(74) Representative: Giambrocono, Alfonso, Dr. Ing.

(57) **Abstract**

A switch (1) for vehicles of motorcycle type, in particular for controlling motorcycle direction indicators, is associated with a support (2) connected to the vehicle handlebar and internally supporting fixed electrical contacts (10) connected to a user item such as said indicators, an activation member (11) for said user item being movable relative to said support (2) and cooperating with moving contacts (38A); said contacts (38A) are associated with support means (35) movable with translational movement in the interior of said support (2) together with the activation member, for quick deactivation of the user item there being provided means (29) arranged to cooperate in form-fitting relationship with the support means (35) to achieve said quick deactivation.

## Description

This document relates to a switch for vehicles of motorcycle type, in accordance with the introduction to the main claim.

Various types of switches for vehicles of motorcycle type are known. With particular reference to switch-deviators used for operating the direction indicators of a motorcycle, these are generally associated with a support connected to the vehicle handlebar, relative to which they are movable. Specifically, on the outside of this support there is provided an operating member or switch cooperating with moving contact elements arranged to close fixed contacts inserted into the support and hence activate a user item, for example a direction indicator.

Known switch-deviators comprise moving contact elements defined, in a more or less complex manner, by complicated lever systems and mechanisms which are of lengthy and difficult assembly and hence contribute to increasing the switch cost. These mechanisms are also difficult to regulate. Because of this, incorrect assembly or imperfect adjustment result in considerable operating problems with obvious consequences (which can be dangerous to the user) for the behaviour, for example, to the motorcycle direction indicators.

In addition, with known switches it is possible that accidental touching of the reset button (which deactivates the user item connected to the switch) while the user item is activated can result in deactivation of this latter.

Moreover, with known switches, it is not possible to test their operation before mounting them on the relative support. This can result in obvious problems if, after being mounted and arranged on the motorcycle, faults are discovered in their operation.

An object of the present invention is to provide a switch-deviator which represents an improvement compared with known switches.

A particular object of the invention is to provided a switch of the stated type which comprises a small number of components and is therefore of simpler and quicker assembly.

A further object is to provide a switch of the stated type which is of reliable use.

A further object is to provide a switch of the stated type which can be tested before being mounted on its support.

These and further objects which will be apparent to the expert of the art are attained by a switch in accordance with the accompanying claims.

The present invention will be more apparent from the accompanying drawing, which is provided by way of non-limiting example, and in which:
Figure 1 is a cross-section through a first embodiment of a switch according to the invention;
Figure 2 is a section on the line 2-2 of Figure 1;
Figure 3 is a section on the line 3-3 of Figure 1;
Figure 4 is a cross-section through a second embodiment of the switch of the invention;
Figure 5 is a section on the line 5-5 of Figure 4;
Figure 6 is a section on the line 6-6 of Figure 4;
Figure 7 is a section on the line 7-7 of Figure 4;
Figure 8 is a view analogous to that of Figure 4, but of a further embodiment of the invention;
Figures 9 and 10 are sections on the lines 9-9 and 10-10 of Figure 8 respectively.

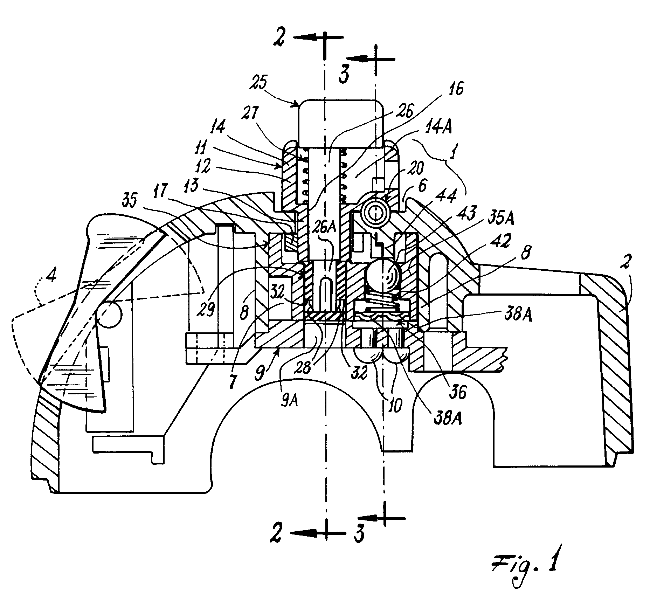

With reference to Figures 1 to 3, a switch according to the invention, in particular for activating motorcycle direction indicators, is indicated overall by 1 and is associated with a support 2 in the form of a half-casing possibly carrying other elements for activating other members or user items of the vehicle (only one, namely the light switch 4, being shown in Figure 1). The support 2 is associated in known manner with the motorcycle handlebar.

This support has an elongate slot in correspondence with a compartment 7 defined by shoulders 8 and closed lowerly by a flat base 9 carrying fixed contacts 10 connected in known manner to the vehicle right and left direction indicators (not shown). The compartment 7 houses various components of the switch 1, a deviator 11 being mounted on the outside of the support 2.

Specifically, the deviator 11 comprises an ergonomically shaped body 12 with arched sides 12A and 12B and a substantially cylindrical projection 13 with a square section inserted into the slot 6 and terminating in the compartment 7. A part 14 of said body, external to said compartment, is hollow at 14A, this cavity being connected to a through hole 16 provided in the projection 13. The body 12 is secured to the support 2 by a split ring 17 which is inserted into the compartment 7, is mounted on the projection 13 and acts on the support 2 from the interior of said compartment. A compression spring 20 inserted into a cavity 21 defined between the body 12 and the support 2 cooperates with the deviator 11 during its translational movement (along a plane containing the longitudinal axis W of the spring) on the support 2. This spring automatically returns the body 12 into the position shown in the figures, in which no direction indicator is activated.

A pushbutton 25 and a stem 26 connected to it are housed in the cavity 14A and in the hole 16 respectively. This pushbutton cooperates with a compression spring 27 interposed between the pushbutton itself and the body 12 of the deviator 11. The stem 26 has one end 26A provided with projecting fins 28 elastically deformable towards the stem to maintain this latter (and hence the pushbutton 25) associated with a body 29 positioned within the compartment 7.

The body 29 has a wedge-shaped portion 30 (or sides lying in inclined planes) and a portion 31 of rectilinear section (ie a part of parallelepiped shape), this latter arranged to cooperate, during deactivation of the direction indicators, with a through hole 9A provided in the base 9. The portions 30 and 31 are internally hollow so as to house said stem 26. In addition, undercuts 32 are provided to cooperate with the fins 28 so as to maintain said stem and the pushbutton 25 associated with the body 29.

This body cooperates with an element 35 movable within the compartment 7 parallel to the deviator 11. This element carries an electrical contact member 36 arranged to cooperate with said fixed contacts 10. Specifically, the element 35 comprises a body 35A internally hollow at 35B and having a flared portion 37 (or sides lying in inclined planes) arranged to cooperate with the wedge-shaped portion 30 of the body 29 (positioned in the cavity 35B) so as to be moved by this latter as described hereinafter.

This element contains the member 36, which is movable rigidly with it and comprises a substantially U-shaped metal element 38 supporting contacts 38A arranged to cooperate with the fixed contacts 10. The element 38 is movable within recesses 40 and 41 in the body 35A against a compression spring 42 (positioned in another recess 35F in the body 35A) on which there acts a presser element 43 in the form of a ball cooperating with a portion 44 of the support 2. In this portion there are three seats 45, 46 and 47 corresponding to different operating positions of the member 36, namely activation of the right indicators, neutral position (indicators deactivated), and activation of the left indicators respectively. The element or ball 43 (movable in a direction perpendicular to the activation or deactivation direction of the user item together with the element 38) can be positioned in these seats so as to lock the member 36 in the desired position until the operating indicator is deactivated.

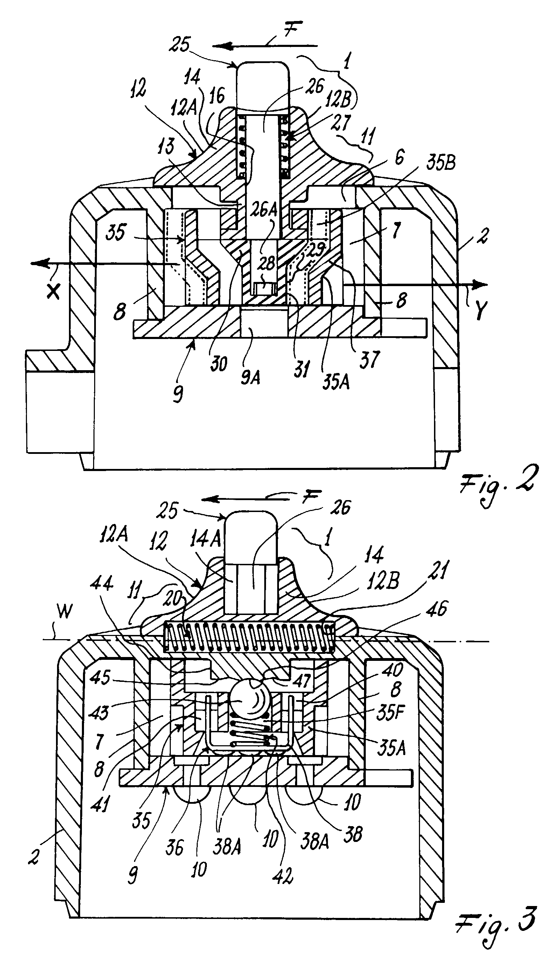

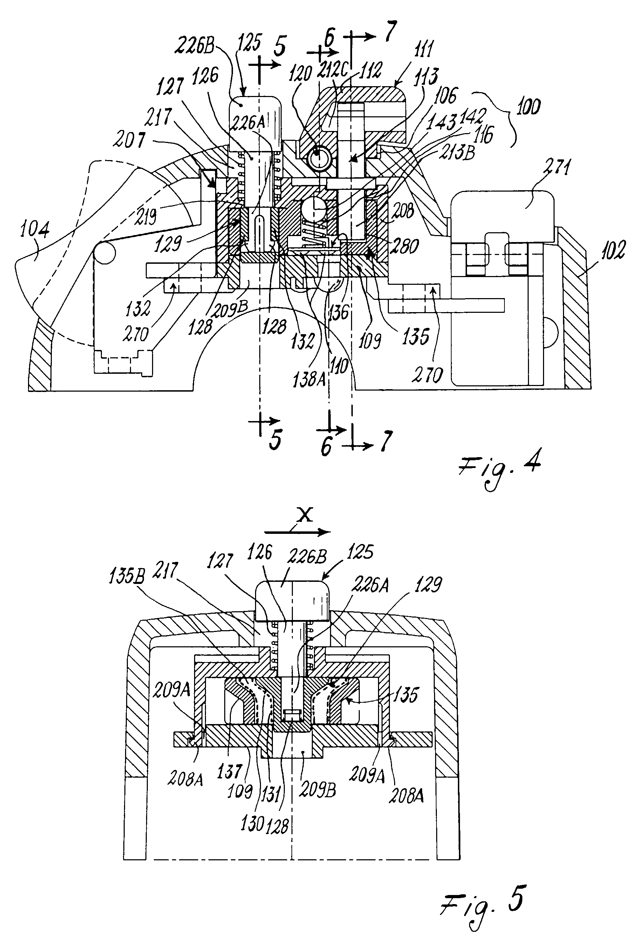

The use of the embodiment illustrated in Figures 1, 2 and 3 will now be described assuming, for example, that the left direction indicators of the motorcycle are to be activated. To achieve this, the deviator 11 is moved by the user towards the left in Figures 2 and 3 (as indicated by the arrows F therein). This movement against the spring 20 causes the body 29 to move within the seat 7 (rigid with the deviator via the stem 26 contained substantially without slack within the hole 16) and bear against the body 35A of the element 35. Because of the shape of the body 29 and the corresponding shape of the body 35A, these bodies mate without any gap, and the movement of the deviator 11 causes the element 35 to move (arrow X of Figure 2). During its translational movement within the compartment 7, the body 29 (acting as the drive member for the element 35, which acts as the movable support means for the moving contacts 38A) becomes positioned spaced from (ie not coaxial with) the hole 9A of the base 9. Consequently the pushbutton 25 cannot be pressed in that, if it were, the body 29 would bear against the base 9. Hence any accidental deactivation of the direction indicators is prevented during their activation.

After its movement, the deviator 11 returns to its initial position, dragged there by the spring 20. However the element 35 remains in the position attained in that the element 43 urged by the spring 42 is engaged to maintain the direction indicators active. This element is moved to the left in Figure 2 as shown by dashed lines.

To now deactivate the indicators, the pushbutton 25 is simply pressed against the spring 27. This causes the body 29 to move towards and into the hole 9A and hence its portion 30 to slide relatively on the portion 37 (of corresponding shape) of the element 35. This sliding, together with the movement of the body 29 within the hole 9A (operating as the deactivation member for the user item), results in a thrust in the opposite direction to the arrow X on the body 35A of said element 35, which moves in the direction Y of Figure 2 to deactivate the left indicators (by separating the contacts 38A from the contacts 10). On releasing the pushbutton, this returns to its initial position shown in the figures.

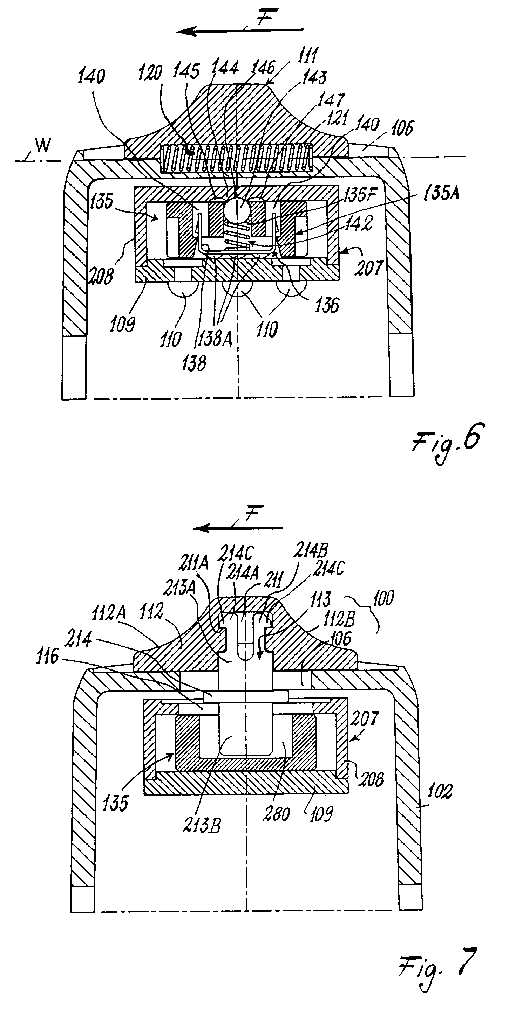

With reference now to Figures 1 to 4, in which parts corresponding or equivalent to those of Figures 1 to 3 are indicated by the same reference numerals plus 100, the switch of the invention (indicated overall by 100) is associated with the support 102 which, in the embodiment of the figures under examination, carries other members or user items of the vehicle, such as the light switch 104 and the horn switch 271, shown in Figure 4.

This support comprises the elongate slot 106 in correspondence with which there is present within the support 102 a box casing 207 defined by an element 208, bounding the casing upperly and laterally, associated lowerly with the flat base 109 carrying the fixed contacts 110 connected to the vehicle right and left direction indicators. The casing 207 is defined in particular by a snap connection between the ends 208A of the element 208 and seats 209A in the base 109 (see Figure 2). The base 109 is fixed to the support 102 via lugs 270 fixed to corresponding parts on the casings of the other user items 104 and 271. These latter are associated in known manner with this support.

The casing 207 houses various components of the switch 100, the deviator 111 being fixed on the outside of the support 111.

Specifically, the deviator 111 comprises the body 112 having a seat 212C into which there is snap-inserted a peg 113 through the slot 106 and terminating in the body 207. A part 213A of this peg comprises two fins 214A and 214B arranged to deform (by mutual approach) during its insertion into the seat 212C provided in the deviator 111. The fins 214A and 214B are provided with an end tooth 214C arranged to cooperate with a step 211A provided in the seat 212C to achieve snap-coupling between the peg and the deviator.

The peg 113 comprises a portion 213B penetrating into a through hole 116 provided in the body 207 and an intermediate flange or collar 214. This flange secures the peg, and hence the deviator associated with it, to the support 102 by acting against it from its interior.

Again in the embodiment shown in Figures 4 to 7, the compression spring 120 (inserted into the cavity 121 defined between the body 112 and the support 102) cooperates with the deviator 111 during its translational movement (along a plane containing the longitudinal axis W of the spring).

The support 102 houses within a hole 207 a pushbutton 125 provided with a stem 126 connected to it. This pushbutton cooperates with a compression spring 127 interposed between the head 226B of the pushbutton and a step 219 provided in the hole 217 of the support 102. The stem 126 has one end 226A provided with projecting fins 128 elastically deformable towards the stem to maintain this latter (and hence the pushbutton 125) associated with a body 129 positioned within the compartment 207.

The body 129 has a wedge-shaped portion 130 (or sides lying in inclined planes) and a portion of rectilinear section 131 (ie a part of parallelepiped shape), arranged to cooperate, during deactivation of the direction indicators, with a through hole 209B provided in the base 109. The portions 130 and 131 are internally hollow so as to house said stem 126. In addition, undercuts 132 are provided to cooperate with the fins 128 so as to maintain said stem and the pushbutton 125 associated with the body 129.

The body 129 cooperates with an element 135 movable within the box casing 207 parallel to the deviator 111, and rigid with this latter via the portion 213B of the peg 113 inserted into a seat 280 in said element 135. This latter carries an electrical contact member 136 arranged to cooperate with said fixed contacts 110.

Specifically, the element 135 comprises a body 135A internally hollow at 135B and having a flared portion 137 (or sides lying in inclined planes) arranged to cooperate with the wedge-shaped portion 130 of the body 129 (positioned in the cavity 135B) so as to be moved by this latter as described hereinafter. This element contains the member 136, which is movable rigidly with it and comprises a substantially U-shaped metal element 138 supporting contacts 138A arranged to cooperate with the fixed contacts 110. The element 138 is movable within recesses 140 in the body 135A against a compression spring 142 (positioned in another recess 135F in the body 135A) on which there acts a presser element 143 in the form of a ball cooperating with a portion 144 of the box casing 207. In this portion there are three seats 145, 146 and 147 corresponding to different operating positions of the member 136 (analogous to the operating conditions corresponding to the seats 45, 46, 47 already described in relation to Figures 1-3). The element or ball 143 (movable in a direction perpendicular to the activation and/or deactivation direction of the user item together with the element 138) can be positioned in these seats so as to lock the member 136 in the desired position until the operating indicator is deactivated by the pushbutton 125.

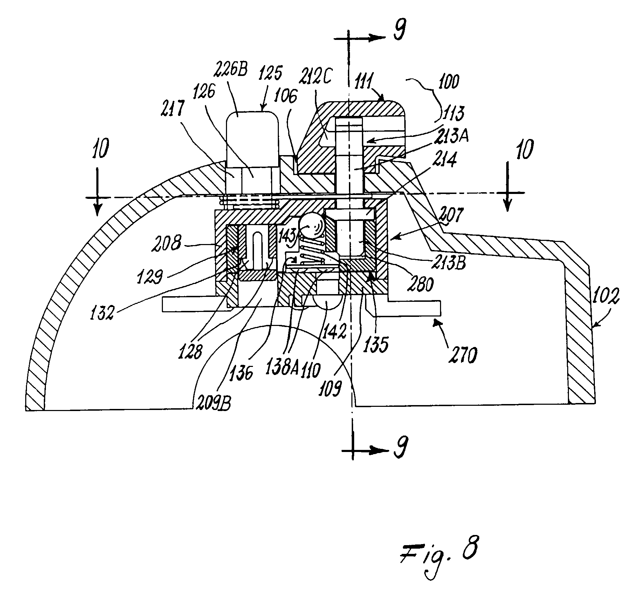

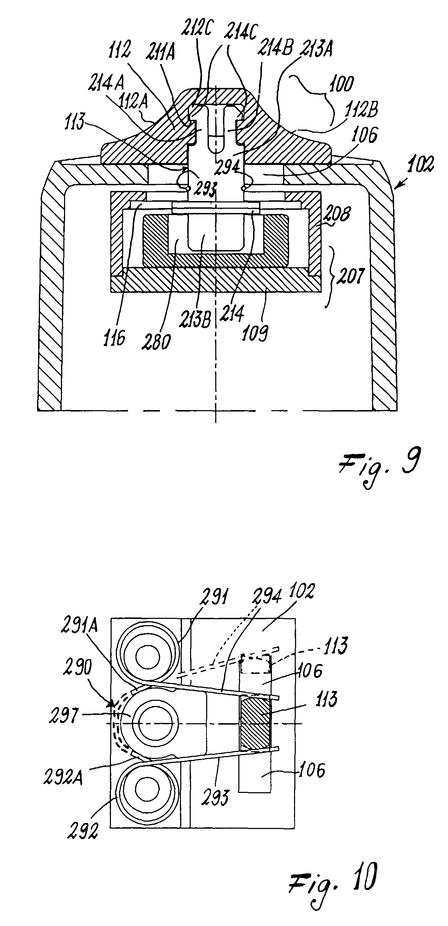

The use of this embodiment will now be described assuming, for example, that the left direction indicators of the motorcycle are to be activated. To achieve this, the deviator 111 is moved by the user towards the left in Figures 6 and 7 (as indicated by the arrows F therein). This movement against the spring 120 causes the element 135 to move within the casing 207 (rigid with the deviator via the peg 113) and bear against the body 129 associated with the pushbutton 125. Because of the shape of the body 129 and the corresponding shape of the body 135A of the element 135, when this latter reaches its end-of-travel position these bodies mate without any gap. During its translational movement within the box casing 207, the element 135 drags with it the moving contacts 138A so as to activate the desired user item. The contact member 136 maintains the desired user item activated until the pushbutton 125 is pressed. It should be noted that this activation persists even though after its movement, the deviator 111 returns to its initial position, dragged there by the spring 120, and by virtue of the fact that the seat 280 in which the peg 113 is present has a transverse dimension (visible in Figure 7) such as to allow this movement without said peg (rigid with the deviator) cooperating with the element 135. Consequently the element 135 remains in the position attained in that the element 143 urged by the spring 142 engages in one of the seats 145 or 147 to maintain the direction indicators active. This element is moved to the left, as shown by dashed lines in Figure 5.

To now deactivate the indicators, the pushbutton 125 is simply pressed against the spring 127. This causes the body 129 to move towards and into the hole 209B and hence its portion 130 to slide relatively on the portion 137 (of corresponding shape) of the element 135. This sliding, together with the movement of the body 129 within the hole 209B (operating as the deactivation member for the user item), results in a thrust in the direction of the arrow X of Figure 5 on the body 135A of said element 135, which moves in the direction of this arrow to deactivate the left indicators (by separating the contacts 138A from the contacts 110). On releasing the pushbutton, this returns to its initial position shown in the figures.

Figures 8 to 10, in which parts corresponding to those of Figures 4, 5, 6 and 7 are indicated by the same reference numerals, show a modified embodiment of the invention. In this, the compression spring 120 is replaced by at least one spiral spring 290 (two, 291 and 292, in Figure 10) housed on the box casing 207 in proximity to the stem 126 of the pushbutton 125. The spring 290 (or each spring 291, 292) comprises an arm 293 cooperating with a first side of the peg 113, and an arm 294 cooperating with the opposite side. If only one spring is provided (as represented by the dashed-line part in Figure 10), these arms represent the ends of the spring. If there are two springs (as shown by full lines in Figure 10), each arm is part of a corresponding spring having its other end (291A and 292A respectively) resting on a suitable stop provided on the support 102. In this manner the use of the compression spring of Figures 4 to 7 is no longer necessary. This facilitates the assembly of the switch of the invention.

The action of the arms 293 and 294 against the peg always returns this latter and hence the deviator 111 to the neutral position after each activation by the user. This position is represented by full lines in Figure 10, whereas the activation position is indicated by dashed lines.

In addition, in the embodiment under examination, the flange 214 of the peg 113 is inserted into the box casing 207 (as shown in Figure 8). This enables the operation of the switch 100 to be easily tested before being connected to the support 102, which is not possible with the embodiments of Figures 1 to 7, in which this test can only be carried out by replacing the peg 113 with an appropriate implement (of known type, not shown), coupled to the deviator 111. However with these previous embodiments the correct return of the deviator to its central or neutral position cannot be verified because of the presence of the compression spring 120.

The switch-deviator of the invention is of simple construction, comprises a small number of parts, and is of reliable use.

Various embodiments of the invention have been described. Others are however obtainable from the aforegoing description and are to be considered as falling within the scope of the present document.

## Claims

1. A switch (1, 100) for vehicles of motorcycle type, in particular for controlling motorcycle direction indicators, which is associated with a support (2, 102) connected to the vehicle handlebar and internally supporting fixed electrical contacts (10, 110) connected to a user item such as said indicators, said switch comprising an activation member (11, 111) for said user item movable relative to said support (2, 102) and cooperating with moving contacts (38A, 138A),
characterised in that said contacts (38A, 138A) are associated with support means (35, 135) movable with translational movement in the interior of said support (2, 102) together with the activation member (11, 111), for quick deactivation of the user item there being provided means (29, 129) arranged to cooperate in form-fitting relationship with the support means (35, 135) to achieve said quick deactivation.

2. A switch as claimed in claim 1, characterised in that the movable member (35, 135) and the deactivation means (29, 129) both comprise inclined surface portions (30, 37, 130, 137) arranged to mate during the activation of the user item and arranged to slidingly cooperate during deactivation of said user item.

3. A switch as claimed in claim 1, characterised in that the movable member (35, 135) carrying the moving contacts (36, 136) comprises a cavity (35B, 135B) containing the mover and deactivation means (29, 129), the moving contacts being carried by a member (38, 138) which is rigid with the member (35, 135) movable in the user item activation and/or deactivation direction but is movable in a direction perpendicular to this latter against elastic means (42, 142), an element (43, 143) being provided for locking said member (38, 138) carrying the contacts (38A, 138A) in positions in which these latter activate the user item.

4. A switch as claimed in claim 1, characterised by comprising enabling means (9A, 209B) with which the quick deactivation means (29, 129) cooperate during this deactivation of the user item.

5. A switch as claimed in claims 1 and 4, characterised in that the deactivation means comprise a body (29, 129) having its inclined surface portion (30, 130) connected to a rectilinear part (31, 131) arranged to cooperate with the deactivation enabling means (9A, 209B).

6. A switch as claimed in claim 4 or 5, characterised in that the deactivation enabling means are an aperture (9A, 209B) provided in an element (9, 109) carrying the fixed contacts and relative to which the support means (35, 135) for the moving contacts (38A, 138A) and the activation and deactivation means (29, 129) move.

7. A switch as claimed in claim 5, characterised in that the body (29) defining the deactivation means is associated with a user item deactivation pushbutton (25) carried by the activation member (11).

8. A switch as claimed in claim 7, characterised in that the pushbutton (25) moves within the activation member (11) against a spring (27) and is snap-coupled to the body (29) defining the activation and deactivation means.

9. A switch as claimed in claim 5, characterised in that the activation member (111) and the deactivation means are separate from each other and are independently associated with the support (102).

10. A switch as claimed in claim 9, characterised in that the body (129) defining the activation and deactivation means is associated with a user item deactivation pushbutton (125) associated with the support (102) and separated from the activation member.

11. A switch as claimed in claim 10, characterised in that the pushbutton (125) moves within a seat (217) in the support (102) against a spring (127) and is snap-coupled to the body (129) defining the activation and deactivation means.

12. A switch as claimed in claim 1, characterised in that the activation member (11, 111) moves relative to the support (2, 102) against elastic means (20, 120, 290, 291, 292), said member being inserted into a slot (6, 106) in said support and being slidingly movable within this slot.

13. A switch as claimed in claim 1, characterised in that the movable member (135) carrying the moving contacts (136) is rigid with the activation member (111) via a connection element (113), this latter being snap-coupled to said activation member and being inserted into a seat (280) in the movable member (135), this seat allowing free movement of said connection element after activation of the user item without this movement resulting in the deactivation of this latter, said movement being generated by the elastic means (120, 290, 291, 292) acting on the activation member (111).

14. A switch as claimed in claim 6, characterised in that the element (109) carrying the fixed contacts (110) is part of a box member (207) containing the support means (135) for the moving contacts (138A) and the quick deactivation means (129), said box member being independent of the support (102) for the switch (100).

15. A switch as claimed in claim 12, characterised in that the elastic means are a compression spring (20, 120).

16. A switch as claimed in claim 12, characterised in that the elastic means are at least one spiral spring (290, 291, 292).

17. A switch as claimed in claims 13 and 14, characterised in that the connection element (113) secures the activation member (111) to the box member (207) independently of the support (2), this enabling the operation of the switch (100) to be tested, even if not mounted in said support.
